# EUROPÄISCHE PATENTSCHRIFT

(11) **EP 0 925 144 B1**
(45) Veröffentlichungstag und Bekanntmachung des Hinweises auf die Patenterteilung: **10.05.2000**
(21) Anmeldenummer: 97943847.0
(22) Anmeldetag: 09.09.1997
(51) Int. Cl.: B23Q 1/00, B23Q 1/70, B23B 31/30

(54) **WERKSTÜCKSPINDELEINRICHTUNG FÜR EINE WERKZEUGMASCHINE**
WORKPIECE SPINDLE DEVICE FOR A MACHINE TOOL
DISPOSITIF A BROCHE PORTE-PIECE POUR UNE MACHINE-OUTIL

(30) Priorität: 13.09.1996 DE 19637256
(43) Veröffentlichungstag der Anmeldung: 30.06.1999
(73) Patentinhaber: INDEX-WERKE GMBH & CO. KG HAHN & TESSKY, 73730 Esslingen (DE)
(72) Erfinder: LINK, Helmut, Friedrich, D-73773 Aichwald (DE); TRAUTMANN, Günther-Heinrich, D-73230 Kirchheim (DE)
(74) Vertreter: Hoeger, Stellrecht & Partner
(86) Internationale Anmeldenummer: EP9704896
(87) Internationale Veröffentlichungsnummer: WO9810889

(56) Entgegenhaltungen:
- EP-A- 0 440 096
- DE-A- 4 236 270
- DE-A- 4 237 901
- US-A- 5 549 427

## Beschreibung

Um ein zu bearbeitendes Werkstück während der Bearbeitung an bzw. in einer Werkstückspindel einer Werkzeugmaschine festzuhalten, benötigt man ein Werkstück-Einspannsystem mit einer mit der Werkstückspindel rotierenden Kraftspannvorrichtung. Am weitesten verbreitet sind hydraulisch betätigte Kraftspannvorrichtungen in Form eines am vorderen Endbereich der Werkstückspindel angebrachten sogenannten Spannfutters, welches mittels eines hydraulisch betätigten Spannzylinders zum Einspannen eines Werkstücks geschlossen und zum Freigeben des Werkstücks geöffnet wird. Der Spannzylinder hat ein mit der Werkstückspindel fest verbundenes Zylindergehäuse, in dem ein mit dem Spannfutter in Wirkverbindung stehender Kolben in Richtung der Spindelachse hin- und hergeschoben werden kann, indem entweder die eine oder die andere Seite des Kolbens mit Drucköl oder einem anderen Druckmedium beaufschlagt wird. Grundsätzlich ist es aber natürlich auch denkbar, daß das Spannfutter unter der Wirkung einer oder mehrerer Federn öffnet und der Kolben des Spannzylinders nur von einer Seite her mit Drucköl beaufschlagt wird, um die Wirkung dieser Feder bzw. Federn zu überwinden und das Spannfutter zu schließen. Das Druckmedium, im allgemeinen also Hydrauliköl, wird dem rotierenden Spannzylinder und damit der auf der einen Seite des Kolbens liegenden Zylinderkammer bzw. den zu beiden Seiten des Kolbens liegenden Zylinderkammern über eine (Hydrauliköl-)Zuführvorrichtung in Form einer sogenannten Drehzuführung zugeführt; eine Drehzuführung an Spannzylindern üblicher Bauart hat ein äußeres, nicht-rotierendes und die Spindelachse ringförmig umfassendes Gehäuseteil mit zwei Ölkanälen sowie ein mit der Werkstückspindel und damit mit dem Zylindergehäuse des Spannzylinders rotierendes inneres Gehäuseteil, welches gleichfalls zwei Ölkanäle besitzt, vom äußeren Gehäuseteil umfaßt und gegebenenfalls vom Zylindergehäuse des Spannzylinders gebildet wird, wobei der eine Ölkanal des inneren Gehäuseteils mit der einen Zylinderkammer und dem einen Ölkanal des äußeren Gehäuseteils kommuniziert, der andere Ölkanal des inneren Gehäuseteils mit der anderen Zylinderkammer und dem anderen Ölkanal des äußeren Gehäuseteils. Eine Ölpumpe führt das Hydrauliköl über eine ölsteuervorrichtung der Drehzuführung und damit dem Spannzylinder mit dem für ein sicheres Einspannen des Werkstücks erforderlichen Druck zu, im allgemeinen wird der Spannzylinder über die Drehzuführung und die Ölsteuervorrichtung aber auch mit Drucköl beaufschlagt, um das Spannfutter wieder zu öffnen. Alle diese Vorgänge werden ebenso wie der Antrieb für die Werkstückspindel durch die normalerweise als CNC-Steuerung ausgebildete Werkzeugmaschinensteuerung gesteuert, mit welcher auch Überwachungsvorrichtungen und Regelvorrichtungen der Ölsteuervorrichtung zum Überwachen und Einregeln des Öldrucks kommunizieren.

Wegen der häufig hohen Drehzahlen der Werkstückspindel, insbesondere der Werkstückspindeln von Drehmaschinen, und den großen, auf die Werkstücke einwirkenden Bearbeitungskräften müssen die Werkstück-Einspannsysteme höchsten Sicherheitsanforderungen genügen: Der das Einspannen des Werkstücks in der Kraftspannvorrichtung der Werkstückspindel bewirkende Öldruck auf der einen Seite des Kolbens des Spannzylinders muß ständig überwacht werden, und wenn die Versorgung des Einspannsystems mit dem Druckmedium ausfällt oder mit einem zu geringen Druck erfolgt, muß eine für ein sicheres Halten des Werkstücks ausreichende Spannkraft über einen Zeitraum aufrechterhalten werden, welcher lange genug ist, damit die Maschinensteuerung die rotierende Werkstückspindel mit Sicherheit zum Stillstand bringen kann, da sonst ein Werkstück mit hoher kinetischer Energie von der Werkstückspindel abgeschleudert werden könnte.

Eine sichere Aufrechterhaltung der erforderlichen Einspannkraft wird bei bekannten Einspannsystemen dadurch erreicht, daß in dem mit der Werkstückspindel rotierenden, doppeltwirkenden Spannzylinder (dessen Kolben also von beiden Richtungen mit dem Druckmedium beaufschlagt werden kann) zwei entsperrbare Rückschlagventile vorgesehen werden, und zwar in jedem der beiden im Zylindergehäuse verlaufenden und zu jeweils einer Seite des Kolbens führenden Strömungspfade jeweils ein Rückschlagventil, so daß bei einem Versagen der Druckmedienzufuhr ein zuvor eingestellter Druck in jeder der beiden Zylinderkammern aufrechterhalten werden kann. Das Einspannsystem, seine Steuerung und die Rückschlagventile sind dabei so ausgebildet, daß sich die Kraftspannvorrichtung nur bei stillstehender Werkstückspindel öffnen läßt, wobei dasjenige Rückschlagventil, welches in dem für das Schließen der Kraftspannvorrichtung verantwortlichen Strömungspfad liegt, durch den im anderen Strömungspfad für das öffnen der Kraftspannvorrichtung aufgebauten Druck entsperrt und geöffnet wird (entsprechendes gilt für den umgekehrten Fall).

Derartige entsperrbare Rückschlagventile sind jedoch nicht nur relativ aufwendig, sondern sie haben auch erhebliche Funktionsnachteile: Konstruktionsbedingt drosseln sie die Strömung des Druckmediums weit stärker als ein einfaches, herkömmliches Rückschlagventil, was dazu führt, daß sich die Kraftspannvorrichtung nur vergleichsweise langsam schließen und öffnen läßt; um die Betätigungszeit für die Kraftspannvorrichtung zu verkürzen, weisen bekannte Einspannsysteme für jeden Strömungspfad des Spannzylinders mehrere, parallel geschaltete derartige entsperrbare Rückschlagventile auf, um den Gesamtdurchflußwiderstand zu verringern. Da sich bei bekannten Einspannsystemen mit entsperrbaren Rückschlagventilen letztere nur bei stillstehender Werkstückspindel entsperren und öffnen lassen, ist es nicht möglich, bei rotierender Werkstückspindel den Spanndruck bzw. die von der Kraftspannvorrichtung auf das Werkstück ausgeübten Einspannkräfte zu reduzieren, wenn nach einer Grobbearbeitung, während welcher wegen der hohen, auf das Werkstück ausgeübten Bearbeitungskräfte das Werkstück mit hoher Spannkraft gehalten werden muß, eine Feinbearbeitung des Werkstücks mit geringerer Spannkraft erfolgen könnte, um die durch hohe Spannkräfte hervorgerufenen Werkstückverformungen für die Feinbearbeitung, von der ja eine hohe Genauigkeit gefordert wird, zu reduzieren. Schließlich machen es die bekannten Einspannsysteme mit entsperrbaren Rückschlagventilen im Spannzylinder unmöglich, den im Spannzylinder auf der einen Seite des Kolbens herrschenden Druck laufend in Abhängigkeit von der Drehzahl der Werkstückspindel zu verändern, um die z. B. auf die Spannbacken eines Spannfutters einwirkenden Fliehkräfte zu kompensieren - eine solche Kompensationsmöglichkeit würde es erlauben, unabhängig von der Werkstückspindel-Drehzahl die tatsächlich auf das Werkstück einwirkenden Spannkräfte konstantzuhalten und auf diese Weise die durch die Spannkräfte bewirkten Werkstückdeformationen zu verringern. Wie sich aus den vorstehenden Erläuterungen ergibt, läßt sich bei dem geschilderten bekannten Einspannsystem eine Reduktion des Spanndrucks und damit der Spannkräfte nur mit einem erheblichen Zeitaufwand bewerkstelligen, da zunächst die Werkstückspindel stillgesetzt, sodann die Kraftspannvorrichtung geöffnet und die letztere schließlich mit reduziertem Spanndruck wieder geschlossen werden muß; hierbei muß auch noch das Werkstück durch einen Andrückmechanismus am Herausfallen aus der Kraftspannvorrichtung gehindert werden. Eine solche Vorgehensweise bringt aber zusätzlich auch noch das Risiko mit sich, daß die für eine genaue Endbearbeitung ausschlaggebende exakte Spannposition des Werkstücks verloren geht, wenn sich nämlich das Werkstück bei geöffneter Kraftspannvorrichtung letzterer gegenüber etwas verschiebt.

Schließlich sind die bekannten entsperrbaren Rückschlagventile auch nicht absolut funktionssicher: Zwar werden sie im Neuzustand auf Dichtheit geprüft, es gibt aber keine praktikable Möglichkeit, während der Betriebszeit der Werkzeugmaschine eine solche Prüfung durchzuführen. Infolgedessen kann nicht ausgeschlossen werden, daß durch Schmutz oder eine Verharzung des üblicherweise das Druckmedium bildenden Hydrauliköls das Rückschlagventil seine Dichtheit verliert, und schon die geringste Undichtigkeit führt beim Versagen der Druckmedienversorgung zu einem sofortigen Abfall des Spanndrucks - in diesem Zusammenhang muß man sich vor Augen halten, daß die bekannten Drehzuführungen unvermeidlich ganz erheblich lecken, so daß ein undichtes Rückschlagventil aufgrund dieser Leckverluste zu einem sofortigen Abfall des Spanndrucks führt.

Die FR-PS 2 675 230 beschreibt nun ein Einspannsystem mit entsperrbaren Rückschlagventilen im Spannzylinder, welches jedoch ein Absenken des im Spannzylinder herrschenden Drucks bei laufender Werkstückspindel ermöglicht. Zu diesem Zweck sind parallel zu den entsperrbaren Rückschlagventilen des Spannzylinders Druckventile eingebaut, welche bei einem Mindestspanndruck von z. B. 10 bar öffnen, bei einem höheren Druck offen bleiben und dann jeweils einen Bypass zu dem zugeordneten Rückschlagventil bilden, wobei der Bypass so ausgebildet ist, daß er einen starken Drosseleffekt bewirkt. Bei einem plötzlichen Druckverlust unter den Wert des vorgenannten Mindestspanndrucks schließen diese Druckventile schnell genug, um dank des Drosseleffekts der Bypassleitung den in der betreffenden Zylinderkammer herrschenden hohen Druck zumindest nahezu aufrechtzuerhalten. Bei einem langsamen Druckabfall kann der Druck in der betreffenden Zylinderkammer aber bis auf den genannten Mindestspanndruck absinken; ein solcher langsamer Druckabfall kann gewollt stattfinden, um die Spannkraft zu reduzieren, er kann aber auch durch eine Fehlfunktion der Druckmedienversorgung hervorgerufen werden, z. B. durch eine im Betrieb auftretende Undichtigkeit in einer Schlauchverbindungsleitung, und da eine Unterscheidung dieser beiden Fälle nicht möglich ist, kann es bei einer Fehlfunktion der Druckmedienversorgung zu einem Herausschleudern des Werkstücks aus der Kraftspannvorrichtung kommen.

Bei den vorstehend beschriebenen, mit einer sogenannten Drehzuführung (Hydrauliköl-Zuführvorrichtung zum Zuführen und Ableiten von Hydrauliköl zum bzw. vom rotierenden Zylindergehäuse des Spannzylinders) versehenen Spannzylindern üblicher Bauart nimmt das äußere, nicht-rotierende Gehäuseteil der Drehzuführung mindestens zwei in Richtung der Spindelachse im Abstand voneinander angeordnete Lager auf, mit deren Hilfe ein inneres, mit dem Spannzylindergehäuse rotierendes Gehäuseteil der Drehzuführung in deren äußerem Gehäuseteil gelagert ist, und das äußere Gehäuseteil der Drehzuführung wird mittels stationärer Anschläge am Mitdrehen gehindert.

Die Ölsteuervorrichtung, über die der Ölzu- und -abfluß zur bzw. von der Drehzuführung gesteuert wird, ist bei allen bekannten Konstruktionen über zwei flexible Schlauchleitungen an die Drehzuführung angeschlossen und enthält einen durch die vorstehend erwähnte Ölpumpe aufladbaren Druckölspeicher, ein zwischen diesem und der Drehzuführung liegendes Druckregelventil zum Einregeln des an der Kraftspannvorrichtung anliegenden Öldrucks, sowie ein zwischen Druckölspeicher und Ölpumpe liegendes Rückschlagventil zur Verhinderung ungewollter Druckverluste (sieht man einmal von den unvermeidlichen Leckverlusten in der Drehzuführung ab). Eine solche, von einer Ölpumpe gespeiste Ölsteuervorrichtung ergibt sich z. B. aus der DE-42 37 901-C2.

Die Erfindung befaßt sich nun mit einer Werkstückspindeleinrichtung für eine Werkzeugmaschine mit einer in einem Spindelgehäuse um eine Spindelachse drehbar gelagerten, antreibbaren Werkstückspindel, welche mit einer Kraftspannvorrichtung zum Einspannen eines zu bearbeitenden Werkstücks versehen ist, und mit einer hydraulischen Betätigungsvorrichtung für die Kraftspannvorrichtung, welche einen hydraulischen Spannzylinder mit einem mit der Werkstückspindel fest verbundenen Zylindergehäuse sowie einem in einem Zylinderraum des Zylindergehäuses in Richtung der Spindelachse verschiebbaren und mit der Kraftspannvorrichtung in Wirkverbindung stehenden Kolben besitzt, wobei dem Spannzylinder eine über ein äußeres, nicht-rotierendes Gehäuseteil verfügende Hydrauliköl-Zuführvorrichtung zum Verbinden wenigstens eines im Zylindergehäuse vorgesehenen Ölkanals mit einer den Hydraulikölzufluß von einer Druckölquelle über einen Ölströmungspfad zu einem Zylinderraum des Spannzylinders steuernden Ölsteuervorrichtung zugeordnet ist und die Ölsteuervorrichtung ein zwischen der Druckölquelle und der Ölzuführvorrichtung liegendes Druckregelventil sowie zwischen letzterem und der Druckölquelle einen Druckölspeicher und, stromaufwärts des letzteren, ein Rückschlagventil zur Verhinderung ungewollter Druckverluste des Spannzylinders aufweist. Aufgrund der vorstehenden Ausführungen versteht es sich von selbst, daß an die Stelle von Hydrauliköl auch ein anderes geeignetes Druckmedium treten kann, daß das Zylindergehäuse des Spannzylinders nicht unmittelbar mit der Werkstückspindel verbunden sein muß, daß der Spannzylinder ein doppeltwirkender Zylinder sein und infolgedessen das Zylindergehäuse mehrere Ölkanäle haben kann und daß die Hydrauliköl-Zuführvorrichtung als herkömmliche und oben geschilderte Drehzuführung ausgebildet sein könnte.

Der Erfindung lag die Aufgabe zugrunde, eine solche Werkstückspindeleinrichtung so zu gestalten, daß sie nicht nur eine hohe Betriebssicherheit gewährleistet, sondern bei rotierender Werkstückspindel eine beliebige Veränderung der Spannkraft ermöglicht, und zwar bei Verwendung eines Spannzylinders, welcher einfacher aufgebaut ist als der vorstehend beschriebene bekannte Spannzylinder mit entsperrbaren Rückschlagventilen und mit Druckventile enthaltenden Bypass-Pfaden.

Zur Lösung dieser Aufgabe wird bei eine Werkstückspindeleinrichtung der oben genannten Art erfindungsgemäß vorgeschlagen, (a) das nicht-rotierende Gehäuseteil der Ölzuführvorrichtung und das Spindelgehäuse fest miteinander zu verbinden, (b) die Ölsteuervorrichtung fest mit dem nicht-rotierenden Gehäuseteil der Ölzuführvorrichtung zu verbinden und leitungslos an die Ölzuführvorrichtung anzuschließen, und (c) den Ölströmungspfad zwischen der Ölsteuervorrichtung und dem Zylinderraum ventillos zu gestalten.

Hierdurch lassen sich insbesondere die folgenden Vorteile erzielen:

Da der Spannzylinder kein Rückschlagventil bzw. keine Rückschlagventile enthält und das in der Ölsteuervorrichtung enthaltene Rückschlagventil stromaufwärts der unvermeidlich leckenden Ölzuführvorrichtung, d. h. also beispielsweise der vorstehend geschilderten bekannten Drehzuführung, liegt, läßt sich bei laufender Werkstückspindel mit dem Druckregelventil der Ölsteuervorrichtung auch ein geringerer Spanndruck einregeln, insbesondere also ein drehzahlabhängiger Spanndruck, obwohl es sich bei dem in der Ölsteuervorrichtung enthaltenen Rückschlagventil um ein ganz einfaches, herkömmliches Rückschlagventil handeln kann.

Da bei der erfindungsgemäßen Einrichtung das nicht-rotierende Gehäuseteil der Ölzuführvorrichtung vom Spindelgehäuse getragen wird, sind durch die Erfindung die Voraussetzungen dafür geschaffen worden, die Ölsteuervorrichtung, welche üblicherweise ein nicht unbeträchtliches Gewicht aufweist, fest mit der Ölzuführvorrichtung zu verbinden, also insbesondere gleichfalls vom Spindelgehäuse tragen zu lassen, was einen weiteren, hinsichtlich der Betriebssicherheit ganz wesentlichen Vorteil mit sich bringt:

Die Ölsteuervorrichtung kann leitungslos an die Ölzuführvorrichtung angeschlossen werden, so daß es nicht der üblichen, flexiblen Schlauchverbindungsleitungen zwischen Ölsteuervorrichtung und Ölzuführvorrichtung bedarf, und zwar auch dann nicht, wenn die Werkstückspindel mit dem sie lagernden Spindelgehäuse auf einem verfahrbaren Maschinenschlitten angeordnet ist.

Außerdem führt die Erfindung zu vergleichsweise kurzen Ölkanälen zwischen dem Druckregelventil und dem Spannzylinder, weshalb sich bei einer erfindungsgemäßen Werkstückspindeleinrichtung auch bei kleinsten Spanndrücken die Kraftspannvorrichtung vergleichsweise schnell schließen und öffnen läßt. Infolge der kurzen Strömungspfade und der Tatsache, daß im Spannzylinder keine Sicherheitsrückschlagventile erforderlich sind, wodurch diese Strömungspfade praktisch ungedrosselt sind, entstehen im Spannzylinder bei einer Erhöhung des Spanndrucks auch keine sich insbesondere auf das Werkstück nachteilig auswirkenden Druckspitzen.

Trotz der unvermeidlichen Leckage der zwischen Spannzylinder und Rückschlagventil liegenden Hydrauliköl-Zuführvorrichtung läßt sich gewährleisten, daß auch bei einem Ausfall der Ölpumpe der erforderliche Spanndruck über denjenigen Zeitraum aufrechterhalten bleibt, welcher für das Stillsetzen der rotierenden Werkstückspindel benötigt wird, da sich diese Leckverluste durch einen hinreichend groß dimensionierten Druckölspeicher oder durch eine zweite Ölpumpe kompensieren lassen.

Schließlich können bei bevorzugten Ausführungsformen der erfindungsgemäßen Werkstückspindeleinrichtung die Werkstückspindel, das diese lagernde Spindelgehäuse, der Spannzylinder, dessen Ölzuführvorrichtung und die Ölsteuervorrichtung samt Druckregelventil, Rückschlagventil und Druckölspeicher eine komplette, funktionsfähige Baueinheit bilden, welche montage- und testfreundlich ist, vor allem dann, wenn es sich bei der Werkstückspindel um eine sogenannte Motorspindel handelt, bei der der Spindelantriebsmotor in die Werkstückspindel integriert ist.

Auch sei noch darauf hingewiesen, daß es eine erfindungsgemäße Werkstückspindeleinrichtung erlaubt, den Spanndruck in Abhängigkeit von der Drehzahl der Werkstückspindel stetig zu verändern, um die auf die Spannelemente der Kraftspannvorrichtung einwirkenden Fliehkräfte zu kompensieren, jedenfalls dann, wenn die Kraftspannvorrichtung eine geringe Hysterese aufweist, wie dies z. B. bei den bekannten, als sogenannte Hebelfutter ausgebildeten Spannfuttern der Fall ist.

Wenn die Ölsteuervorrichtung, wie dies bei bevorzugten Ausführungsformen der erfindungsgemäßen Einrichtung der Fall ist, vor dem Rückschlagventil einen Drucksensor aufweist, so läßt sich mit diesem der eingangsseitig an der Ölsteuervorrichtung anliegende Öldruck überwachen, insbesondere also die Funktion einer die Einrichtung mit Hydrauliköl versorgenden Ölpumpe sowie die Unversehrtheit einer Verbindungsleitung zwischen der Pumpe und der Ölsteuervorrichtung, was dann von besonderer Bedeutung ist, wenn die Einrichtung auf einem Schlitten der Werkzeugmaschine angeordnet ist und infolgedessen eine flexible Schlauchleitung als Verbindungsleitung benötigt wird. Um auch noch die mit einem Ausfall dieses Drucksensors verbundenen Risiken auszuschalten - ein solcher Ausfall könnte sonst nicht festgestellt werden -, empfiehlt es sich, vor dem Rückschlagventil zwei den an der Ölsteuervorrichtung anliegenden Öldruck überwachende Drucksensoren vorzusehen, da sich diese beiden. Drucksensoren dann auch gegenseitig überwachen können.

Bei einer besonders vorteilhaften Ausführungsform der erfindungsgemäßen Einrichtung ist zwischen der Ölzuführvorrichtung und dem Druckregelventil der Ölsteuervorrichtung eine als Element einer Strömungswächtervorrichtung für eine Hydraulikölströmung zum Spannzylinder dienende Drossel zur Erzeugung eines Druckgefälles vorgesehen, zwischen der und der ölzuführvorrichtung ein Drucksensor für die Durchführung eines Vergleichs des stromabwärts der Drossel herrschenden Öldrucks mit dem am Druckregelventil eingestellten Öldruck angeordnet ist. Der genannte Druckvergleich kann in der CNC-Steuerung der Werkzeugmaschine vorgenommen werden, so daß die CNC-Steuerung feststellen kann, wenn im Zuge des Einspannens eines Werkstücks kein nennenswerter Ölstrom zum Spannzylinder mehr fließt (an der Drossel findet dann auch kein nennenswerter Druckabfall mehr statt), worauf die CNC-Steuerung den Antrieb der Werkstückspindel einschalten kann - der genannte Druckvergleich kann also dazu herangezogen werden, ein Freigabesignal zum Start der Werkstückspindel zu erzeugen.

Wenn es sich bei dem Spannzylinder um einen doppeltwirkenden Druckmittelzylinder handelt, bei dem also die zwei zu beiden Seiten des Kolbens liegenden Zylinderkammern des Spannzylinders abwechselnd mit dem Druckmedium beaufschlagt werden können, um die Kraftspannvorrichtung zu schließen oder zu öffnen, verfügt die Ölsteuervorrichtung über zwei mit der Ölzuführvorrichtung verbundene Strömungspfade, für die in der Ölsteuervorrichtung ein Mehrwegeventil zum wahlweisen Verbinden des ersten oder zweiten Strömungspfads mit dem Druckregelventil bzw. einem Ölauslaß der Ölsteuervorrichtung versehen ist. In diesem Fall empfiehlt es sich, sowohl den ersten, als auch den zweiten Strömungspfad der Ölsteuervorrichtung mit einem Drucksensor zu versehen, denn dadurch lassen sich die folgenden Vorteile erzielen: Sowohl während des Schließens, als auch während des Öffnens der Kraftspannvorrichtung lassen sich mit diesen beiden Drucksensoren die am Druckregelventil eingestellten Drücke ständig und unabhängig kontrollieren, außerdem ermöglichen es die beiden Drucksensoren, indirekt die Schaltposition des Mehrwegeventils zu überwachen, da die Drucksensoren anzeigen, welche Seite des Spannzylinders mit Druck beaufschlagt bzw. drucklos ist; auch läßt sich mit den beiden Drucksensoren in jeder Schaltposition des Mehrwegeventils die Wirksamkeit des Druckölspeichers überwachen, und schließlich überwachen sich die beiden Drucksensoren gegenseitig, da bei jeder Betätigung der Kraftspannvorrichtung ein Druckwechsel in jedem der beiden Strömungspfade erfolgen muß.

Besonders vorteilhafte Ausführungsformen der erfindungsgemäßen Werkstückspindeleinrichtung weisen eine Ölzuführvorrichtung auf, welche im Prinzip der sich aus der EP-0 657 239-A ergebenden Ölzuführvorrichtung entspricht, wobei es sich empfiehlt, diese bekannte Ölzuführvorrichtung noch so weiter zu verbessern, wie es sich aus der folgenden Beschreibung sowie den beigefügten Ansprüchen ergibt.

Schließlich sei bezüglich des vorstehend geschilderten Grundprinzips der Erfindung noch auf folgendes hingewiesen: Natürlich muß das nicht-rotierende Gehäuseteil der Ölzuführvorrichtung nicht unmittelbar am Spindelgehäuse befestigt sein, da es nur auf eine feste, d. h. für die Praxis starre Verbindung zwischen diesem Gehäuseteil und dem Spindelgehäuse ankommt. Gleiches gilt bezüglich der Verbindung zwischen Ölsteuervorrichtung und Ölzuführvorrichtung. Das Merkmal, daß die Ölsteuervorrichtung leitungslos an die ölzuführvorrichtung angeschlossen ist, darf nicht so einengend interpretiert werden, daß dadurch z. B. Ölbohrungen in einem starren Zwischenstück zwischen Ölsteuervorrichtung und Ölzuführvorrichtung ausgeschlossen werden - über dieses Zwischenstück könnte die Ölsteuervorrichtung auch mit der Ölzuführvorrichtung fest verbunden sein. Wie sich aus dem Vorstehenden ergibt, soll mit dem Merkmal, daß der Ölströmungspfad zwischen der Ölsteuervorrichtung und einem Zylinderraum des Spannzylinders ventillos zu gestalten ist, zum Ausdruck gebracht werden, daß dieser Ölströmungspfad zwischen der Ölsteuervorrichtung und dem Zylinderraum kein Rückschlagventil enthält.

Weitere Merkmale, Einzelheiten und Vorteile von Ausführungsformen der Erfindung ergeben sich aus den beigefügten Ansprüchen und/oder aus der nachfolgenden Beschreibung sowie der beigefügten zeichnerischen Darstellung einer besonders vorteilhaften Ausführungsform der erfindungsgemäßen Einrichtung; in der Zeichnung zeigen:
- Fig. 1: einen axialen Längsschnitt durch die Werkstückspindel, das Spindelgehäuse, den Spannzylinder und die Ölzuführvorrichtung samt schematischer Darstellung der Ölsteuervorrichtung, und
- Fig. 2: ein Schaltbild der Ölsteuervorrichtung.

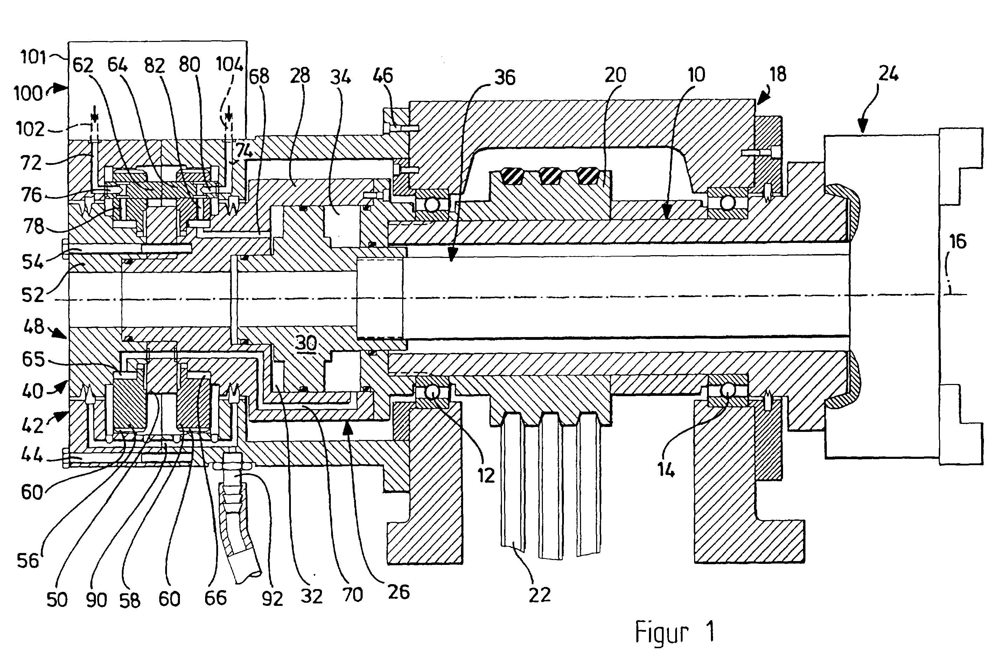

Die Fig. 1 zeigt eine Werkstückspindel 10, welche als Hohlwelle ausgebildet und mittels Lagern 12 und 14 um eine Spindelachse 16 drehbar in einem Spindelgehäuse 18 (auch Spindelstock genannt) gelagert ist. Eine auf der Spindel 10 befestigte Riemenscheibe 20, über welche Antriebsriemen 22 verlaufen, dient zusammen mit einem nicht dargestellten, die Riemen 22 antreibenden Motor dem Antrieb der Werkstückspindel 10; die letztere könnte aber auch als sogenannte Motorspindel ausgebildet sein (derartige Motorspindeln, bei denen der Spindelantriebsmotor in die Werkstückspindel integriert ist, sind bekannt und weit verbreitet). Das Spindelgehäuse 18 samt Werkstückspindel 10 kann auf einem verfahrbaren Schlitten einer Werkzeugmaschine angeordnet sein, vor allem dann, wenn es sich bei der Werkstückspindel um eine Motorspindel handelt, jedoch kann auch die dargestellte Ausführungsform von einem Maschinenschlitten getragen werden, wenn der nicht gezeigte Spindelantriebsmotor gleichfalls auf diesem Schlitten angeordnet ist.

An dem gemäß Fig. 1 rechten Ende der Werkstückspindel 10 ist eine Kraftspannvorrichtung 24 befestigt, welche bei der dargestellten Ausführungsform die Gestalt eines bekannten Backenfutters hat; in dieser Kraftspannvorrichtung läßt sich ein zu bearbeitendes Werkstück fest einspannen, so daß es mit der Werkstückspindel 10 um die Spindelachse 16 rotiert. Mit dem gemäß Fig. 1 linken Ende der Werkstückspindel 10 ist ein als Ganzes mit 26 bezeichneter Spannzylinder fest verbunden, so daß auch dieser Spannzylinder zusammen mit der Spindel 10 um die Spindelachse 16 rotiert. Der Spannzylinder 26 hat ein mehrteiliges Zylindergehäuse 28 sowie einen in diesem in Richtung der Spindelachse 16 hin- und herverschiebbar geführten Kolben 30, durch den der vom Zylindergehäuse 28 gebildete Zylinderraum in eine linke und eine rechte Zylinderkammer 32 bzw. 34 unterteilt wird. Eine als zur Spindelachse 16 koaxiales Rohr ausgebildete Kolbenstange 36 ist mit ihrem gemäß Fig. 1 linken Ende fest mit dem Kolben 30 verbunden, während ihr rechtes Ende in bekannter und üblicher Weise in Wirkverbindung mit der Kraftspannvorrichtung 24 steht - da die axiale Betätigung eines solchen, in Fig. 1 schematisch dargestellten Backenfutters bekannt ist, kann auf die Darstellung von Details verzichtet werden, so daß nur noch erwähnt werden soll, daß eine axiale Verschiebung der Kolbenstange 36 in der einen Richtung zu einem Schließen der Kraftspannvorrichtung führt, eine Verschiebung in der anderen Richtung zum Öffnen der Kraftspannvorrichtung.

Dem Spannzylinder 26 ist eine als Ganzes mit 40 bezeichnete Ölzuführvorrichtung zugeordnet; derartige Ölzuführvorrichtungen werden üblicherweise als Drehzuführungen bezeichnet und gehen hinsichtlich ihres prinzipiellen Aufbaus beispielsweise aus der EP-0 657 238-A1 hervor. Bei der dargestellten Ausführungsform hat die Ölzuführvorrichtung 40 einen zweigeteilten äußeren, nicht-rotierenden Gehäuseteil 42, welcher von Schrauben 44 zusammengehalten wird und mittels Schrauben 46 am Spindelgehäuse 18 befestigt ist. Des weiteren verfügt die Ölzuführvorrichtung 40 über einen mit der Werkstückspindel 10 um die Spindelachse 16 rotierenden inneren Gehäuseteil, welcher als Ganzes mit 48 bezeichnet wurde und von mehreren Einzelelementen gebildet wird: Eines dieser Elemente ist das Zylindergehäuse 28, ein weiteres Element ist ein Ringscheibenkörper 50, welcher bezüglich der Spindelachse 16 rotationssymmetrisch gestaltet ist, und der Vervollständigung des inneren Gehäuseteils 48 dient ein gleichfalls bezüglich der Spindelachse 16 rotationssymmetrisch gestalteter Ringkörper 52. Die Elemente 28, 50 und 52 werden durch Schrauben 54 zusammengehalten. Erwähnt sei noch, daß die der Ölzuführvorrichtung 40 zuzurechnende Außenumfangsfläche des Zylindergehäuses 28 bezüglich der Spindelachse 16 gleichfalls rotationssymmetrisch gestaltet ist. Zu beiden Seiten des Ringscheibenkörpers 50 ist jeweils ein Ringscheibenkörper 56 bzw. 58 angeordnet; damit sich diese beiden Ringscheibenkörper nicht zusammen mit der Werkstückspindel 10 drehen können, wohl aber in Richtung der Spindelachse 16 geringfügig frei verschiebbar sind, sind sich in Richtung der Spindelachse erstreckende Verzahnungen 60 vorgesehen, und zwar am Außenumfang eines jeden der Ringscheibenkörper 56 und 58 sowie an den benachbarten Innenumfangsbereichen des äußeren Gehäuseteils 42. Schließlich sind noch zwei sich in Richtung der Spindelachse 16 erstreckende Zylinderkörper 62 und 64 vorgesehen, welche die Ringscheibenkörper 56 und 58 mit minimalem Spiel durchdringen.

Der Ringscheibenkörper 56 bildet zusammen mit dem Ringkörper 52 eine erste, mit der Spindelachse 16 koaxiale Ringkammer 65, und eine zweite, gleichartige Ringkammer 66 befindet sich zwischen dem Ringscheibenkörper 58 und dem Zylindergehäuse 28. In letzterem ist ein Ölkanal 68 vorgesehen (dieser und alle anderen, im folgenden noch erwähnten Ölkanäle werden jeweils von einer oder mehreren, ineinander übergehenden Bohrungen gebildet), welcher die linke Zylinderkammer 32 mit der rechten Ringkammer 66 verbindet. Ein sich durch den Ringkörper 52, den Ringscheibenkörper 50 und das Zylindergehäuse 28 hindurch erstreckender Ölkanal 70 verbindet die rechte Zylinderkammer 34 mit der linken Ringkammer 65. Im äußeren Gehäuseteil 42 der Ölzuführvorrichtung befinden sich zwei Ölkanäle, nämlich ein erster Ölkanal 72 und ein zweiter Ölkanal 74, deren in Fig. 1 obere Enden eine Öleintritts- bzw. eine Ölaustrittsöffnung der Ölzuführvorrichtung 40 bilden. Dem ersten Ölkanal 72 sind Ölkanäle 76 und 78 im Zylinderkörper 62 bzw. im Ringscheibenkörper 56 zugeordnet, dem zweiten Ölkanal 74 Ölkanäle 80 und 82 im Zylinderkörper 64 bzw. im Ringscheibenkörper 58, so daß der erste Ölkanal 72 des nicht-rotierenden äußeren Gehäuseteils 42 mit der linken Ringkammer 65 kommuniziert, der zweite Ölkanal 74 mit der rechten Ringkammer 66. Wegen der sich kreisringförmig um die Spindelachse 16 herum erstreckenden Ringkammern 65 und 66 kommuniziert also der erste Ölkanal 72 ständig mit der rechten Zylinderkammer 34, der zweite Ölkanal 74 ständig mit der linken Zylinderkammer 32, obwohl der äußere Gehäuseteil 42 der ölzuführvorrichtung 40 nicht rotiert, sich der Spannzylinder 26 jedoch zusammen mit der Werkstückspindel 10 dreht.

Wie die Fig. 1 erkennen läßt, handelt es sich bei dem Spannzylinder 26 bei der bevorzugten Ausführungsform um einen sogenannten lagerlosen Spannzylinder, da das Gehäuse 28 des Spannzylinders 26 von der mit den Lagern 12 und 14 gelagerten Werkstückspindel 10 getragen wird und nicht über eine eigene Lagerung verfügt und da das äußere Gehäuseteil 42 der Ölzuführvorrichtung 40 vom Spindelgehäuse 18 getragen wird und nicht von Wälzlagern.

Jeder der nicht-rotierenden Ringscheibenkörper 56 und 58 bildet mit den rotierenden Elementen des inneren Gehäuseteils 48 der Ölzuführvorrichtung 40 jeweils drei enge Dichtspalte, die bei der dargestellten Ausführungsform in zur Spindelachse 16 senkrecht verlaufenden Ebenen liegen, sich bei Zuführung von Drucköl auf ein vorgegebenes Spaltbreitenmaß einregeln (wegen der minimalen axialen Verschiebbarkeit der Ringscheibenkörper 56 und 58) und so gewährleisten, daß keine Berührung zwischen stehenden und rotierenden Teilen der Ölzuführvorrichtung 40 stattfindet; in diesem Zusammenhang sei noch einmal auf die EP-0 657 238-A1 verwiesen.

Derartige Drehzuführungen, wie die Ölzuführvorrichtung 40, sind niemals absolut dicht, sondern führen zu einer nicht unbeträchtlichen Öl-Leckrate von beispielsweise 30 - 35 ml/s. Wie die Fig. 1 erkennen läßt, wird das Lecköl in einem Kanal 90 gesammelt, welcher im unteren Bereich des nicht-rotierenden äußeren Gehäuseteils 42 der Ölzuführvorrichtung 40 vorgesehen ist und aus dem das Lecköl über einen Abführstutzen 92 ablaufen und zur Ölpumpe zurückgeführt werden kann.

Erfindungsgemäß ist unmittelbar am nicht-rotierenden äußeren Gehäuseteil 42 der Ölzuführvorrichtung 40 eine in Fig. 1 nur schematisch dargestellte Ölsteuervorrichtung 100 befestigt, von der die Fig. 1 nur einen ersten und einen zweiten Strömungspfad 102 bzw. 104 für das Hydrauliköl andeutet, welche im Bereich der Peripherie der Ölsteuervorrichtung 100 von Bohrungen in einem Gehäuse 101 der Ölsteuervorrichtung 100 gebildet werden, die Drucköl-dicht an die Ölkanäle 72 und 74 des äußeren Gehäuseteils 42 der Ölzuführvorrichtung 40 angeschlossen sein sollen.

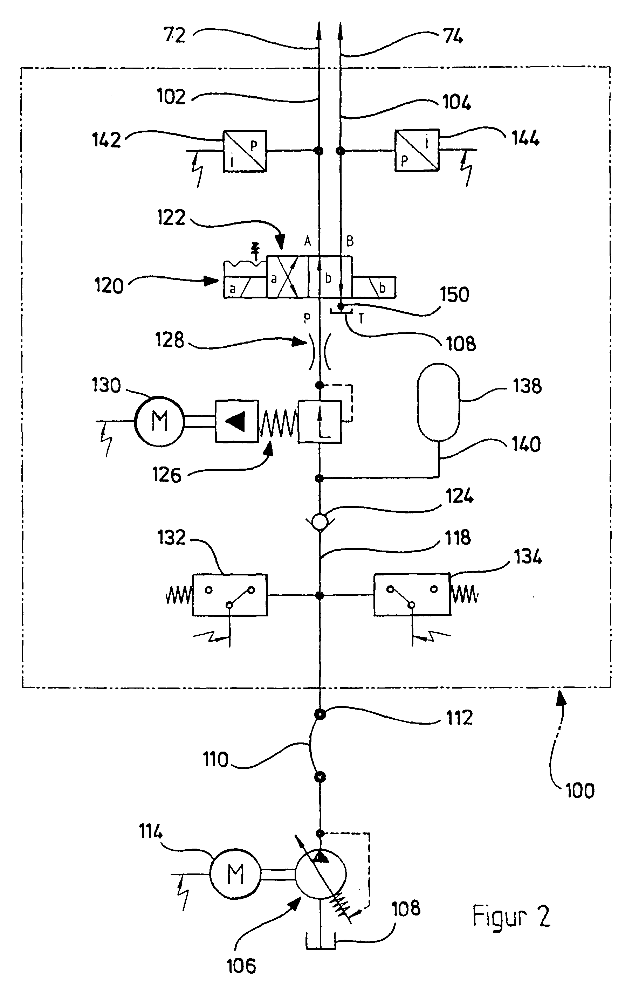

Anhand der Fig. 2 soll nun der Aufbau der Ölsteuervorrichtung 100 weiter erläutert werden.

In Fig. 2 sind oben der erste und der zweite Ölkanal 72 bzw. 74 der Ölzuführvorrichtung 40 angedeutet, welche in die beiden in der Fig. 1 angedeuteten Ölkanäle 102 und 104 der Ölsteuervorrichtung 100 übergehen. Die Fig. 2 zeigt außer der Ölsteuervorrichtung 100 eine als Ganzes mit 106 bezeichnete ölpumpe, welche aus einem Tank 108 Hydrauliköl ansaugt und in eine beispielsweise als flexible Schlauchleitung ausgebildete Verbindungsleitung 110 fördert, die an einen Drucköleinlaß 112 der Ölsteuervorrichtung 100 angeschlossen ist. Wie in Fig. 2 angedeutet, ist die Pumpe 106 mit Mitteln versehen, mit denen sich der maximale, an der Verbindungsleitung 110 anliegende Förderdruck begrenzen und einstellen läßt, da derartige Mittel dem Fachmann jedoch bekannt und nicht Gegenstand der vorliegenden Erfindung sind, bedarf es diesbezüglich keiner weiteren Erläuterungen. Auch zeigt die Fig. 2 noch einen von der nicht dargestellten CNC-Steuerung der gleichfalls nicht gezeigten Werkzeugmaschine gesteuerten Elektromotor 114 für den Antrieb der Pumpe 106.

Vom Drucköleinlaß 112 führt ein Ölkanal 118 zu einem Mehrwegeventil 120, bei dem es sich bei der dargestellten Ausführungsform um ein marktübliches hydraulisches 4/2-Wegeventil handelt, wie es beispielsweise von der Firma HERION-Werke KG, 7012 Fellbach, Bundesrepublik Deutschland, bezogen werden kann. Dieses Mehrwegeventil wird elektromagnetisch betätigt, sein Schieberkolben (das eigentliche Ventilglied) 122 ist gemäß Fig. 2 in horizontaler Richtung zwischen einer linken und einer rechten Position hin- und herschiebbar (wobei die Fig. 2 den Schieberkolben in seiner linken Position zeigt), und wie in Fig. 2 im linken Teil des Mehrwegeventils 120 angedeutet wurde, soll es sich bei dem letzteren um ein Rastenventil handeln, um den Schieberkolben 122 in seinen beiden Positionen gegen ein unbeabsichtigtes Verschieben zu sichern. Die elektromagnetische Betätigung des Mehrwegeventils 120 erfolgt unter der Kontrolle der CNC-Steuerung der Werkzeugmaschine.

Der Ölkanal 118 enthält zwischen'dem Drucköleinlaß 112 und dem Mehrwegeventil 120 hinter- bzw. nacheinander ein einfaches, herkömmliches Rückschlagventil 124, welches einen Ölrückfluß gemäß Fig. 2 nach unten verhindert, ein als Ganzes mit 126 bezeichnetes Druckregelventil und eine schematisch dargestellte Drossel 128 zur Erzeugung eines Druckgefälles, wenn die Drossel von Hydrauliköl durchströmt wird. Bei dem Druckregelventil 126 soll es sich um ein marktübliches Gerät handeln, wie es beispielsweise in der Informationsschrift RIQ Ausgabe 1/1996 der deutschen Firma REXROTH beschrieben ist. Ein solches Druckregelventil wird mit hydraulischer Servounterstützung motorisch verstellt (der elektrische Stellmotor wurde bei 130 angedeutet), und zwar unter der Kontrolle der CNC-Steuerung der Werkzeugmaschine. Zwischen dem Rückschlagventil 124 und dem Drucköleinlaß 112, d. h. stromaufwärts des Rückschlagventils, wird der im Ölkanal 118 herrschende Öldruck durch zwei als sogenannte Druckwächter (Druckschalter) gestaltete Drucksensoren 132 und 134 erfaßt, welche gleichfalls mit der Maschinensteuerung verbunden sind und es somit ermöglichen, den von der Ölpumpe 106 erzeugten Öldruck und damit die Funktionstüchtigkeit der Pumpe sowie der Verbindungsleitung 110 zu überwachen; hierfür würde zwar prinzipiell ein einziger der beiden Drucksensoren 132, 134 genügen, da jedoch in diesem Fall ein Fehlverhalten des einzigen Drucksensors nicht unmittelbar erkennbar würde, sind an dieser Stelle zwei redundante Drucksensoren vorgesehen, damit diese beiden Drucksensoren sich gegenseitig überwachen können.

Zwischen dem Rückschlagventil 124 und dem Druckregelventil 126 ist ein Druckölspeicher 138 über einen Ölkanal 140 an den Ölkanal 118 angeschlossen. Auch bei diesem Druckölspeicher handelt es sich um ein auf dem Markt erhältliches Gerät, in welches gegen den Druck eines Gaspolsters ein Druckmedium, wie Hydrauliköl, hineingepumpt werden kann, wobei das vom Speicher 138 aufgenommene Hydraulikölvolumen vom Gaspolster des Speichers z. B. durch eine flexible Membran getrennt ist.

Den beiden vom Mehrwegeventil 120 wegführenden Ölkanälen 102 und 104 ist jeweils ein gleichfalls mit der Maschinensteuerung verbundener Drucksensor 142 bzw. 144 zugeordnet, mit denen sich unter anderem, jedoch nicht im laufenden Betrieb, die Funktionstüchtigkeit des Druckölspeichers 138 überwachen läßt, und zwar in jeder der beiden Stellungen des Mehrwegeventils 120 - die Drucksensoren 142 und 144 überwachen dann, ob die Vorspannung des Gaspolsters des Druckölspeichers 138 noch hinreichend ist, d. h. ob der Druckölspeicher in der Lage ist, am Eingang des Druckregelventils 126 (d. h. stromabwärts des Rückschlagventils 124) den für einen funktionssicheren Betrieb der erfindungsgemäßen Einrichtung erforderlichen Mindestdruck aufrechtzuerhalten, wenn am Drucköleinlaß 112, aus welchen Gründen auch immer, ein Druckabfall eintritt. Weitere Funktionen der beiden Drucksensoren 142 und 144 werden sich aus der nachfolgenden Beschreibung der Funktion der erfindungsgemäßen Einrichtung noch ergeben.

Schließlich läßt die Fig. 2 noch erkennen, daß ein unter dem rechten Teil des Mehrwegeventils 120 angedeuteter Ölauslaß 150 über eine Verbindungsleitung, welche der Übersichtlichkeit der Fig. 2 halber nicht dargestellt wurde, mit dem Tank 108 verbunden ist.

Vor der Beschreibung der verschiedenen Funktionen der erfindungsgemäßen Einrichtung soll noch darauf hingewiesen werden, daß ein motorisch verstellbares Druckregelventil, wie das Druckregelventil 126, gegenüber einem gleichfalls bekannten sogenannten Proportional-Druckregelventil den entscheidenden Vorteil hat, daß sich der mit dem Druckregelventil eingestellte Druck nicht verändern kann, wenn z. B. die elektrische Versorgung der Werkzeugmaschine oder auch nur der erfindungsgemäßen Einrichtung ausfällt oder eine zum Druckregelventil führende elektrische Leitung unterbrochen wird.

Wenn ein Werkstück in der Kraftspannvorrichtung 24 eingespannt wird, fördert die zu diesem Zweck eingeschaltete Ölpumpe 106 Drucköl über das Mehrwegeventil 120 in einen der beiden Ölkanäle 102, 104, bei der in Fig. 2 dargestellten Position des Mehrwegeventils in den ersten Ölkanal 102; in welchen der Ölkanäle 102, 104 das Drucköl einzuspeisen ist, um die Kraftspannvorrichtung 24 zu schließen, hängt von deren Konstruktion ab, d. h. davon, ob zum Schließen der Kraftspannvorrichtung die Kolbenstange 36 gemäß Fig. 1 nach links oder nach rechts bewegt werden muß. Die betreffende Seite des Kolbens 30 des Spannzylinders 26 wird dann mit dem durch das Druckregelventil 126 vorgegebenen Spanndruck beaufschlagt. Der Ölstrom durch die Drossel 128 hindurch bewirkt an dieser einen Druckabfall, so daß der Drucksensor 142 einen kleineren Druck mißt als den durch das Druckregelventil 126 vorgegebenen Druck. Wenn der in der CNC-Maschinensteuerung erfolgende Vergleich des vom Drucksensor 142 gemessenen Drucks mit dem durch das Druckregelventil 126 vorgegebenen Druck ergibt, daß der vom Drucksensor 142 erfaßte Druck gleich dem durch das Druckregelventil 126 vorgegebenen Druck ist (oder nahezu gleich diesem Druck, wenn man die Leckrate der Ölzuführvorrichtung 40 berücksichtigt), zeigt dies an, daß sich der Kolben 30 nicht mehr bewegt, d. h. daß das Werkstück in der Kraftspannvorrichtung 24 mit dem vorgegebenen Spanndruck eingespannt ist; daraufhin erzeugt die CNC-Maschinensteuerung ein Freigabesignal für den Antrieb der Werkstückspindel 10. Während der Bewegung des Kolbens 30 wird das in der nicht mit Drucköl beaufschlagten Zylinderkammer enthaltene Öl über den Ölkanal 104 (jedenfalls bei der in Fig. 2 dargestellten Position des Mehrwegeventils 120), das Mehrwegeventil 120 und den Ölauslaß 150 in den Tank 108 verdrängt.

Entsprechendes gilt natürlich für den Fall, daß bei stillgesetzter Werkstückspindel 10 ein in der Kraftspannvorrichtung 24 eingespanntes Werkstück freigegeben und aus der Kraftspannvorrichtung entnommen werden soll; zu diesem Zweck wird das Mehrwegeventil 120 umgeschaltet, so daß es beispielsweise seine gemäß Fig. 2 rechte Position einnimmt, in der der Ölkanal 102 mit dem Ölauslaß 150 und der Ölkanal 104 mit dem Ölkanal 118 kommuniziert. In diesem Fall wird der vom Drucksensor 144 erfaßte Druck mit dem vom Druckregelventil 126 vorgegebenen Druck verglichen, und Druckgleichheit zeigt an, daß die Öffnungsbewegung der Kraftspannvorrichtung 24 beendet ist.

Die beiden Drucksensoren 142 und 144 ermöglichen es aber vor allem, in jeder Position des Mehrwegeventils 120 zu überwachen, ob derjenige Druck, den das Druckregelventil 126 programmgemäß vorgeben soll, auch tatsächlich erreicht wird, und diese Überwachung stellt eine ständige und unabhängige Kontrolle dar. Die Fig. 2 läßt auch erkennen, daß die beiden Drucksensoren 142 und 144 dazu herangezogen werden können, indirekt zu überwachen, ob das Mehrwegeventil 120 seine durch das Steuerungsprogramm der Werkzeugmaschine vorgegebene Schaltposition auch tatsächlich einnimmt, da die beiden Drucksensoren anzeigen, welche Seite des Kolbens 30 des Spannzylinders 26 druckbeaufschlagt bzw. drucklos ist. Wie sich aus dem Folgenden noch ergeben wird, überwachen die beiden Drucksensoren 142 und 144 auch die Funktionsfähigkeit des Druckölspeichers 138, und schließlich überwachen sich die beiden Drucksensoren gegenseitig, da bei jeder Betätigung der Kraftspannvorrichtung 24 eine sprunghafte Änderung des Öldrucks in jedem der beiden Ölkanäle 102 und 104 erfolgt.

Im folgenden werden nun weitere denkbare Fälle eines Versagens verschiedener Komponenten erörtert, wozu zu bemerken ist, daß derartige Fälle in der Praxis durchaus auch auftreten; durch die folgenden Erörterungen wird auch bewiesen werden, daß sich dank der Erfindung eine Werkzeugmaschine hinsichtlich der Funktion der Kraftspannvorrichtung absolut sicher betreiben läßt; es wird nämlich jeder Fehler erkannt, worauf dann die Werkstückspindel 10 durch die CNC-Steuerung der Werkzeugmaschine innerhalb weniger Sekunden stillgesetzt wird, insbesondere auch bei einem Energieausfall. In diesem Zusammenhang wird auf die Druckschrift "CNC report", Ausgabe 2/96 aus Mai 1996 der Firma SIEMENS AG, Bereich Automatisierungstechnik, in D-90327 Nürnberg, verwiesen, und zwar dort auf das Kapitel "SINUMERIK Safety Integrated".

Falls die Druckmedienversorgung versagt, z. B. wegen Energieausfall, Defekt der Ölpumpe 106 oder Bruch der Verbindungsleitung 110, wird die kurze Zeitspanne zwischen der Meldung des Fehlers durch wenigstens einen der beiden Drucksensoren 132 und 134 bis zum Stillstand der rotierenden Werkstückspindel 10 durch den Druckölspeicher 138 überbrückt. Bei der vorstehend angegebenen Leckrate der Ölzuführvorrichtung 40 genügt hierfür eine Ölspeicherkapazität des Druckölspeichers 138 von 500 ml.

Derartige, ein Gaspolster, insbesondere ein Stickstoffpolster, enthaltende Druckspeicher versagen meist wegen eines schleichenden Gasverlusts, der dazu führt, daß die Vorspannung des Gaspolsters im Laufe der Zeit, jedoch sehr langsam, abnimmt. Die erfindungsgemäße Einrichtung ermöglicht es nun, mit Hilfe der CNC-Steuerung der Werkzeugmaschine immer wieder den Zustand des Druckölspeichers 138 zu überprüfen, und zwar in folgender Weise: Bei jedem Einschalten der Hydraulik (gegebenenfalls durch Programmvorgabe z. B. alle acht Stunden) wird der Druckölspeicher 138 vermittels der Ölpumpe 106 geladen, d. h. es wird bis zum Erreichen des Betriebsdrucks Öl in den Druckölspeicher gepreßt. Anschließend wird die Pumpe 106 durch die Maschinensteuerung abgeschaltet. Wegen der insbesondere in der Ölzuführvorrichtung 40 auftretenden Leckverluste entlädt sich dann der Druckölspeicher 138 langsam. Die von der Maschinensteuerung erfaßte Zeitspanne zwischen dem Abschalten der Pumpe 106 und dem Zeitpunkt, in dem der mit dem Drucksensor 142 bzw. 144 (je nach Stellung des Mehrwegeventils 120) gemessene Druck einen vorgegebenen Grenzwert unterschreitet, ist ein Maß für den Zustand des Druckölspeichers 138, und für einen funktionssicheren Betrieb der Werkzeugmaschine muß diese Zeitspanne deutlich länger sein als die maximale Abbremszeit für die Werkstückspindel 10, d. h. derjenige Zeitraum, welcher benötigt wird, um die mit maximaler Drehzahl rotierende Werkstückspindel stillzusetzen. Bei nachlassender Gasvorspannung des Druckölspeichers 138 wird die gemessene, vorstehend definierte Zeitspanne immer kürzer, bis schließlich der Druckölspeicher 138 unbrauchbar geworden und zu ersetzen ist.

Ein mit der Werkzeugmaschine abzuarbeitendes Bearbeitungsprogramm für die Maschinensteuerung definiert auch den maximalen Spanndruck, welcher für einen Bearbeitungsvorgang erforderlich ist; ob dieser maximale Spanndruck erreicht wird, läßt sich mit den beiden Drucksensoren 142 und 144 kontrollieren, nachdem zuvor das Druckregelventil 126 auf diesen Druck eingestellt wurde.

Durch den vorstehend beschriebenen Test lassen sich auch anomale Leckverluste z. B. im Rückschlagventil 124, in der Ölzuführvorrichtung 40 oder im Druckregelventil 126 sowie im Mehrwegeventil 120 feststellen.

Die Steuerelemente in der Ölsteuervorrichtung 100 und die Bauteile des Spannzylinders 26 können ohne weiteres so sicher dimensioniert werden, daß sie nicht ausfallen können.

Bei der erfindungsgemäßen Einrichtung garantieren insbesondere die folgenden Merkmale einen sicheren Betrieb der Werkzeugmaschine: fehlende Schlauchleitungen zwischen den Hydraulik-Steuerelementen und dem Spannzylinder sowie eine starre Verbindung der nicht-rotierenden Teile der Ölzuführvorrichtung 40 mit dem Spindelgehäuse 18.

Dank der beweglichen, jedoch gegen ein Verdrehen gesicherten Ringscheibenkörper 56 und 58 der Ölzuführvorrichtung 40 wird die Gefahr, daß sich relativ zueinander drehende Teile der Ölzuführvorrichtung 40 durch Schmutzpartikel in den Dichtspalten blockiert werden, reduziert, und selbst wenn es zu einem solchen Blockieren kommt, hat dies keine spontane Unterbrechung der Ölzuführpfade zur Folge - schlimmstenfalls blockiert die Werkstückspindel 10 oder sie kann aus dem Stillstand nicht mehr anlaufen. Außerdem wird ein Verschleiß der die Dichtspalte zwischen sich einschließenden Bauteile durch die erfindungsgemäße Einrichtung erkannt, weil dann die Ölleckrate ansteigt, wodurch auch der Druckabfall an der Drossel 128 ansteigt, was die CNC-Steuerung der Werkzeugmaschine aufgrund des laufenden Vergleichs derjenigen Drücke erkennt, welche durch die Drucksensoren 142 und 144 erfaßt bzw. durch das Druckregelventil 126 vorgegeben werden.

Es könnten noch andere Sicherheitsmaßnahmen ergriffen werden; wie bereits erwähnt, könnte eine zweite Ölpumpe vorgesehen werden, welche druckgesteuert automatisch in Betrieb genommen wird, wenn die Ölpumpe 106 versagt; in diesem Fall kann auf den Druckölspeicher 138 verzichtet werden. Es wäre außerdem möglich, bei einem Ausfall der Energieversorgung denjenigen Zeitraum zu überbrücken, welcher für das Stillsetzen der Werkstückspindel benötigt wird, indem die von der Werkstückspindel beim Abbremsen infolge der Wirkung ihres Antriebs als Generator erzeugte Energie zum weiteren Betrieb der Ölpumpe genutzt wird, bis die Werkstückspindel zum Stillstand gekommen ist.

## Patentansprüche

1. Werkstückspindeleinrichtung für eine Werkzeugmaschine mit einer in einem Spindelgehäuse (18) um eine Spindelachse (16) drehbar gelagerten, antreibbaren Werkstück-Spindel (10), welche mit einer Kraftspannvorrichtung (24) zum Einspannen eines zu bearbeitenden Werkstücks versehen ist, und mit einer hydraulischen Betätigungsvorrichtung für die Kraftspannvorrichtung, welche einen hydraulischen Spannzylinder (26) mit einem mit der Werkstückspindel (10) fest verbundenen Zylindergehäuse sowie einem in einem Zylinderraum des Zylindergehäuses in Richtung der Spindelachse verschiebbaren ren und mit der Kraftspannvorrichtung in Wirkverbindung stehenden Kolben (30) besitzt, wobei dem Spannzylinder (26) eine über ein äußeres, nicht-rotierendes Gehäuseteil verfügende Hydrauliköl-Zuführvorrichtung (40) zum Verbinden wenigstens eines im Zylindergehäuse (28) vorgesehenen Ölkanals mit einer den Hydraulikölzufluß von einer Druckölquelle über einen Ölströmungspfad zu einem Zylinderraum des Spannzylinders steuernden Ölsteuervorrichtung (100) zugeordnet ist und die Ölsteuervorrichtung ein zwischen der Druckölquelle und der Ölzuführvorrichtung (40) liegendes Druckregelventil (126) sowie zwischen letzterem und der Druckölquelle einen Druckölspeicher und, stromaufwärts des letzteren, ein Rückschlagventil (124) zur Verhinderung ungewollter Druckverluste des Spannzylinders (26) aufweist,
**dadurch gekennzeichnet**, daß
(a) das nicht-rotierende Gehäuseteil (42) der ölzuführvorrichtung (40) und das Spindelgehäuse (18) fest miteinander verbunden sind,
(b) die Ölsteuervorrichtung (100) fest mit dem nicht-rotierenden Gehäuseteil (42) der Ölzuführvorrichtung (40) verbunden und leitungslos an letztere angeschlossen ist, und daß
(c) der Ölströmungspfad zwischen der Ölsteuervorrichtung (100) und dem Zylinderraum (32 bzw. 34) ventillos ist.

2. Einrichtung nach Anspruch 1, dadurch gekennzeichnet, daß die Ölsteuervorrichtung (100) ein mit Ölkanälen (102, 104) versehenes Gehäuse besitzt und der nicht-rotierende Gehäuseteil (42) der Ölzuführvorrichtung (40) wenigstens einen Ölkanal (72, 74) aufweist, welcher unmittelbar an einen der Ölkanäle (102, 104) der Ölsteuervorrichtung angeschlossen ist.

3. Einrichtung nach Anspruch 2, dadurch gekennzeichnet, daß der nicht-rotierende Gehäuseteil (42) der Ölzuführvorrichtung (100) unmittelbar am Spindelgehäuse (18) und das Gehäuse der Ölsteuervorrichtung (100) unmittelbar am nicht-rotierenden Gehäuseteil (42) der Ölzuführvorrichtung (40) befestigt ist.

4. Einrichtung nach einem der vorstehenden Ansprüche, dadurch gekennzeichnet, daß stromaufwärts des Rückschlagventils (124) ein Drucksensor (132, 134) zur Überwachung des an der Ölsteuervorrichtung (100) anliegenden Öldrucks vorgesehen ist.

5. Einrichtung nach Anspruch 4, dadurch gekennzeichnet, daß stromaufwärts des Rückschlagventils (124) zwei den an der Ölsteuervorrichtung (100) anliegenden Öldruck sowie sich gegenseitig überwachende Drucksensoren (132, 134) vorgesehen sind.

6. Einrichtung nach einem der vorstehenden Ansprüche, dadurch gekennzeichnet, daß zwischen der Ölzuführvorrichtung (40) und dem Druckregelventil (126) eine als Element einer Strömungswächtervorrichtung (126, 128, 142, 144) für eine Hydraulikölströmung zum Spannzylinder (26) dienende Drossel (128) zur Erzeugung eines Druckgefälles vorgesehen ist und daß zwischen der Drossel (128) und der Ölzuführvorrichtung (40) ein Drucksensor (142, 144) für die Durchführung eines Vergleichs des stromabwärts der Drossel (128) herrschenden Öldrucks mit dem am Druckregelventil (126) eingestellten Öldruck angeordnet ist.

7. Einrichtung nach einem der vorstehenden Ansprüche, dadurch gekennzeichnet, daß der Kolben (30) des Spannzylinders (26) auf jeder seiner beiden Seiten im Zylinderraum jeweils eine Zylinderkammer (32, 34) definiert, von denen jede über jeweils mindestens einen Ölkanal (68, 70) des Zylindergehäuses (28) sowie über jeweils mindestens einen zugeordneten Ölkanal (64, 66, 76, 78, 80, 82, 72, 74) der Ölzuführvorrichtung (40) permanent mit jeweils mindestens einem zugeordneten ersten bzw. zweiten Ölkanal (102 bzw. 104) der Ölsteuervorrichtung (100) in Verbindung steht, und daß die Ölsteuervorrichtung einen mit der Druckölquelle (106) verbindbaren Drucköleinlaß (112), einen Ölauslaß (150) sowie zwischen dem Druckregelventil (126) und ihrem ersten und zweiten, an die Ölzuführvorrichtung (40) angeschlossenen Ölkanal (102, 104) ein umsteuerbares Mehrwegeventil (120) zum wahlweisen Verbinden des ersten oder zweiten Ölkanals (102 bzw. 104) mit dem Druckregelventil (126) bzw. dem Ölauslaß (150) aufweist.

8. Einrichtung nach den Ansprüchen 6 und 7, dadurch gekennzeichnet, daß sowohl der erste (102) als auch der zweite (104) Ölkanal der Ölsteuervorrichtung (100) mit einem Drucksensor (142 bzw. 144) versehen ist.

9. Einrichtung nach einem der vorstehenden Ansprüche, dadurch gekennzeichnet, daß das Druckregelventil (126) mit einem elektrischen Verstellmotor (130) sowie einem Signalgeber zur Abgabe eines der momentanen Stellung des Druckregelventil entsprechenden Istwert-Signals versehen ist.

10. Einrichtung nach Anspruch 9, dadurch gekennzeichnet, daß dem Verstellmotor (130) eine von letzterem betätigte hydraulische Servo-Antriebsvorrichtung zur Betätigung des Druckregelventils (126) zugeordnet ist.

11. Einrichtung nach einem der vorstehenden Ansprüche, dadurch gekennzeichnet, daß der Druckölspeicher (138) entsprechend der Leckrate der Ölzuführvorrichtung (40) sowie der zum Stillsetzen der mit maximaler Drehzahl drehenden Werkstückspindel (10) erforderlichen Abbremszeit so groß bemessen ist, daß bei einem Abfall des am Drucköleinlaß (112) der Ölsteuervorrichtung (100) anliegenden Öldrucks bis nahezu auf den im Spannzylinder (26) für eine sichere Werkstückspannung maximal erforderlichen Druck letzterer bis zum Stillstand der Werkstückspindel aufrechterhalten wird.

12. Einrichtung nach einem der Ansprüche 7 bis 11, dadurch gekennzeichnet, daß der nicht-rotierende, erste Gehäuseteil (42) der Ölzuführvorrichtung (40) sowie ein bezüglich der Spindelachse (16) von diesem Gehäuseteil umfaßter, mit der Werkstückspindel (10) drehfest verbundener zweiter Gehäuseteil (48) der Ölzuführvorrichtung (40) jeweils einen ersten sowie einen zweiten Ölkanal (72, 74 bzw. 70, 68) aufweisen, daß zwischen den beiden Gehäuseteilen und in Richtung der Spindelachse (16) nebeneinander zwei Ringscheibenkörper (56, 58) angeordnet sind, welche die Spindelachse sowie den zweiten Gehäuseteil umfassen, daß die ersten Ölkanäle (72, 70) der beiden Gehäuseteile über einen Ölkanal (76, 78) des einen Ringscheibenkörpers (56) und die zweiten Ölkanäle (74, 68) der beiden Gehäuseteile über einen Ölkanal (80, 82) des anderen Ringscheibenkörpers (58) miteinander in Verbindung stehen, und daß die beiden Ringscheibenkörper mit dem einen Gehäuseteil (42) drehfest, jedoch in Richtung der Spindelachse (16) spielbehaftet verbunden sind und sich in Richtung der Spindelachse über Dichtspalte am anderen Gehäuseteil (48) abstützen.

13. Einrichtung nach Anspruch 12, dadurch gekennzeichnet, daß die Dichtspalte in senkrecht zur Spindelachse (16) verlaufenden Ebenen liegen.

14. Einrichtung nach Anspruch 12 oder 13, dadurch gekennzeichnet, daß die Ringscheibenkörper (56, 58) drehfest mit dem nicht-rotierenden, ersten Gehäuseteil (42) verbunden sind.

## Claims

1. Workpiece spindle device for a machine tool having a drivable workpiece spindle (10) mounted in a spindle housing (18) for rotation about a spindle axis (16), the workpiece spindle being provided with a power-operated clamping device (24) for gripping a workpiece to be machined, and a hydraulic actuating device for the power-operated clamping device, the actuating device having a hydraulic clamping cylinder (26) with a cylinder housing securely connected to the workpiece spindle (10) as well as a piston (30) displaceable in a cylinder chamber of the cylinder housing in the direction of the spindle axis and being in operative connection with the power-operated clamping device, a hydraulic oil supply device (40) being associated with the clamping cylinder (26), the hydraulic oil supply device having an outer, non-rotating housing portion and connecting at least one oil channel provided in the cylinder housing (28) to an oil control device (100) controlling the flow of hydraulic oil from a pressure oil source via an oil flow path to a cylinder chamber of the clamping cylinder, and the oil control device having a pressure regulating valve (126) located between the pressure oil source and the oil supply device (40) as well as a pressure oil storage device between the pressure regulating valve and the pressure oil source and, upstream of the pressure oil storage device, a check valve (124) for preventing undesired pressure losses of the clamping cylinder (26),
characterized in that
(a) the non-rotating housing portion (42) of the oil supply device (40) and the spindle housing (18) are securely connected to one another,
(b) the oil control device (100) is securely connected to the non-rotating housing portion (42) of the oil supply device (40) and is communicated to the oil supply device without any oil line therebetween, and that
(c) the oil flow path between the oil control device (100) and the cylinder chamber (32 or 34) is without any valve.

2. Device as defined in claim 1, characterized in that the oil control device (100) has a housing provided with oil channels (102, 104), and the non-rotating housing portion (42) of the oil supply device (40) has at least one oil channel (72, 74) which is directly connected to one of the oil channels (102, 104) of the oil control device.

3. Device as defined in claim 2, characterized in that the non-rotating housing portion (42) of the oil supply device (100) is attached directly on the spindle housing (18), and the housing of the oil control device (100) is attached directly on the non-rotating housing portion (42) of the oil supply device (40).

4. Device as defined in any one of the preceding claims, characterized in that a pressure sensor (132, 134) is provided upstream of the check valve (124) for monitoring the oil pressure prevailing at the oil control device (100).

5. Device as defined in claim 4, characterized in that two pressure sensors (132, 134) monitoring the oil pressure prevailing at the oil control device (100) as well as one another are provided upstream of the check valve (124).

6. Device as defined in any one of the preceding claims, characterized in that a throttle (128) serving as an element of a flow monitoring device (126, 128, 142, 144) for a flow of hydraulic oil to the clamping cylinder (26) is provided between the oil supply device (40) and the pressure regulating valve (126) for generating a pressure gradient, and that a pressure sensor (142, 144) is arranged between the throttle (128) and the oil supply device (40) for carrying out a comparison of the oil pressure prevailing downstream of the throttle (128) with the oil pressure set at the pressure regulating valve (126).

7. Device as defined in any one of the preceding claims, characterized in that the piston (30) of the clamping cylinder (26) defines on each of its two sides in the cylinder chamber a respective cylinder chamber (32, 34), each of which communicates permanently via at least one respective oil channel (68, 70) of the cylinder housing (28) as well as via at least one respective, associated oil channel (64, 66, 76, 78, 80, 82, 72, 74) of the oil supply device (40) with at least one respective, associated first or second oil channel (102 and 104, respectively) of the oil control device (100), and that the oil control device has a pressure oil inlet (112) connectable to the pressure oil source (106), an oil outlet (150) as well as a change-over multiway valve (120) between the pressure regulating valve (126) and its first and second oil channels (102, 104) connected to the oil supply device (40) for the selective connection of the first or second oil channel (102 and 104, respectively) to the pressure regulating valve (126) and the oil outlet (150), respectively.

8. Device as defined in claims 6 and 7, characterized in that both the first (102) and the second (104) oil channels of the oil control device (100) are provided with a pressure sensor (142 and 144, respectively).

9. Device as defined in any one of the preceding claims, characterized in that the pressure regulating valve (126) is provided with an electric adjusting motor (130) as well as a signal generator for emitting an actual-value signal corresponding to the current position of the pressure regulating valve.

10. Device as defined in claim 9, characterized in that a hydraulic servo-drive device actuated by the adjusting motor (130) is associated therewith for actuating the pressure regulating valve (126).

11. Device as defined in any one of the preceding claims, characterized in that the pressure oil storage device (138) is dimensioned in accordance with the leakage rate of the oil supply device (40) as well as the braking time required for stopping the workpiece spindle (10) rotating at maximum rotational speed to be of such a size that in the case of a drop in the oil pressure prevailing at the pressure oil inlet (112) of the oil control device (100) to almost the pressure required at the most in the clamping cylinder (26) for a secure workpiece clamping, the latter pressure is maintained until the workpiece spindle is stopped.

12. Device as defined in any one of claims 7 to 11, characterized in that the non-rotating, first housing portion (42) of the oil supply device (40) as well as a second housing portion (48) of the oil supply device (40) which is non-rotatably connected to the workpiece spindle (10) and surrounded by the first housing portion with respect to the spindle axis (16) each have a first as well as a second oil channel (72, 74 and 70, 68, respectively), that two annular disk members (56, 58) are arranged between the two housing portions and next to one another in the direction of the spindle axis (16), the annular disk members surrounding the spindle axis as well as the second housing portion, that the first oil channels (72, 70) of the two housing portions communicate with one another via an oil channel (76, 78) of the one annular disk member (56), and the second oil channels (74, 68) of the two housing portions communicate with one another via an oil channel (80, 82) of the other annular disk member (58), and that the two annular disk members are connected to the one housing portion (42) so as to be non-rotatable but subject to play in the direction of the spindle axis (16) and are supported on the other housing portion (48) in the direction of the spindle axis via sealing gaps.

13. Device as defined in claim 12, characterized in that the sealing gaps are located in planes extending at right angles to the spindle axis (16).

14. Device as defined in claim 12 or 13, characterized in that the annular disk members (56, 58) are non-rotatably connected to the non-rotating, first housing portion (42).

## Revendications

1. Agencement à broche porte-pièce pour une machine-outil, comportant une broche porte-pièce (10) susceptible d'être entraînée et montée en rotation autour d'un axe de broche (16) dans un boîtier de broche (18), ladite broche étant pourvue d'un dispositif de serrage forcé (24) pour serrer une pièce à usiner, et comportant un dispositif d'actionnement hydraulique pour le dispositif de serrage forcé, lequel possède un cylindre de serrage hydraulique (26) avec un boîtier cylindrique solidaire de la broche porte-pièce (10) ainsi qu'un piston (30) en translation dans un espace cylindrique du boîtier cylindrique en direction de l'axe de broche et en liaison active avec le dispositif de serrage forcé, dans lequel est associé audit cylindre de serrage (26) un dispositif d'amenée d'huile hydraulique (40) qui dispose d'une partie de boîtier extérieure non rotative, pour relier l'un au moins des canaux à huile prévus dans le boîtier cylindrique (28) avec un dispositif de commande d'huile (100) qui commande l'amenée d'huile hydraulique depuis une source d'huile hydraulique via une voie d'écoulement d'huile jusqu'à un espace cylindrique du cylindre de serrage, et dans lequel le dispositif de commande d'huile comprend une valve de régulation de pression (126) située entre la source d'huile sous pression et le dispositif d'amenée d'huile (40) ainsi qu'un réservoir d'huile sous pression situé entre ladite valve et la source d'huile sous pression, et en amont dudit réservoir un clapet anti-retour (124) pour empêcher des pertes de pression accidentelles du cylindre de serrage (26), caractérisé en ce que :
(a) la partie de boîtier non rotative (42) du dispositif d'amenée d'huile (40) et le boîtier de broche (18) sont reliés solidairement l'un à l'autre,
(b) le dispositif de commande d'huile (100) est relié solidairement à la partie de boîtier non rotative (42) du dispositif d'amenée d'huile (40) et est branché sans conduite à ce dernier, et
(c) la voie d'écoulement d'huile entre le dispositif de commande d'huile (100) et l'espace cylindrique (32 ou 34) est dépourvue de clapet ou de valve.

2. Agencement selon la revendication 1, caractérisé en ce que le dispositif de commande d'huile (100) possède un boîtier pourvu de canaux à huile (102, 104), et en ce que la partie de boîtier non rotative (42) du dispositif d'amenée d'huile (40) comprend au moins un canal à huile (72, 74) qui est directement raccordé à l'un des canaux à huile (102, 104) du dispositif de commande d'huile.

3. Agencement selon la revendication 2, caractérisé en ce que la partie de boîtier non rotative (42) du dispositif d'amenée d'huile (100) est fixée directement sur le boîtier de broche (18), et en ce que le boîtier du dispositif de commande d'huile (100) est directement fixé sur la partie de boîtier non rotative (42) du dispositif d'amenée d'huile (40).

4. Agencement selon l'une quelconque des revendications précédentes, caractérisé en ce qu'il est prévu, en amont du clapet anti-retour (124), un détecteur de pression (132, 134) pour surveiller la pression d'huile appliquée au dispositif de commande d'huile (100).

5. Agencement selon la revendication 4, caractérisé en ce qu'il est prévu, en amont du clapet anti-retour (124), deux détecteurs de pression (132, 134) qui surveillent la pression d'huile appliquée au dispositif de commande d'huile (100) et qui se surveillent mutuellement.

6. Agencement selon l'une quelconque des revendications précédentes, caractérisé en ce qu'il est prévu, entre le dispositif d'amenée d'huile (40) et la valve de régulation de pression (126), un étranglement (128) servant d'élément d'un dispositif de surveillance d'écoulement (126, 128, 142, 144) d'un écoulement d'huile hydraulique vers le cylindre de serrage (26), afin d'établir une chute de pression, et en ce qu'il est prévu, entre l'étranglement (128) et le dispositif d'amenée d'huile (40), un détecteur de pression (142, 144) pour procéder à une comparaison entre la pression d'huile qui règne en aval de l'étranglement (128) et la pression d'huile réglée au niveau de la valve de régulation de pression (126).

7. Agencement selon l'une quelconque des revendications précédentes, caractérisé en ce que le piston (30) du cylindre de serrage (26) définit dans l'espace cylindrique sur chacun de ses deux côtés une chambre cylindrique respective (32, 34) dont chacune est en communication, via au moins un canal à huile respectif (68, 70) du boîtier cylindrique (28) ainsi que via au moins un canal à huile respectif associé (64, 66, 76, 78, 80, 82, 72, 74) du dispositif d'amenée d'huile (40), en permanence avec au moins un premier ou second canal à huile respectif associé (102 ou 104) du dispositif de commande d'huile (100), et en ce que le dispositif de commande d'huile comprend une admission d'huile sous pression (112) susceptible d'être reliée à la source d'huile sous pression (106), une sortie d'huile (150) ainsi qu'une valve inversible à plusieurs voies (120), laquelle est disposée entre la valve de régulation de pression (126) et son premier et son second canal à huile (102, 104) branché au dispositif d'amenée d'huile (40) et est destinée à relier sélectivement le premier ou le second canal à huile (102 ou 104) respectivement à la valve de régulation de pression (126) et à la sortie d'huile (150).

8. Agencement selon les revendications 6 et 7, caractérisé en ce que le premier (102) et le second canal à huile (104) du dispositif de commande d'huile (100) sont tous deux pourvus d'un détecteur de pression (142 ou 144).

9. Agencement selon l'une quelconque des revendications précédentes, caractérisé en ce que la valve de régulation de pression (126) est pourvue d'un moteur de positionnement électrique (130) ainsi que d'un émetteur de signal pour délivrer un signal de valeur réelle qui correspond à la position momentanée de la valve de régulation de pression.

10. Agencement selon la revendication 9, caractérisé en ce qu'au moteur de positionnement (130) est associé un dispositif d'entraînement assisté hydraulique actionné par ce dernier pour actionner la valve de régulation de pression (126).

11. Agencement selon l'une quelconque des revendications précédentes, caractérisé en ce que le réservoir d'huile sous pression (138) est dimensionné en correspondance du taux de fuite du dispositif d'amenée d'huile (40) ainsi que du temps de freinage nécessaire pour mettre à l'arrêt la broche porte-pièce (10) tournant à la vitesse de rotation maximale, et il est suffisament grand pour que, lors d'une chute de la pression d'huile appliquée à l'admission d'huile sous pression (112) du dispositif de commande d'huile (100) approximativement jusqu'à la pression nécessaire au maximum dans le cylindre de serrage (26) pour un serrage sûr de la pièce à usiner, cette pression soit maintenue jusqu'à l'arrêt de la broche porte-pièce.

12. Agencement selon l'une quelconque des revendications 7 à 11, caractérisé en ce que la première partie de boîtier non rotative (42) du dispositif d'amenée d'huile (40) ainsi qu'une seconde partie de boîtier (48) du dispositif d'amenée d'huile (40), entourée par ladite première partie de boîtier par rapport à l'axe de broche (16) et reliée solidairement en rotation à la broche porte-pièce (10), comportent chacune un premier et un second canal à huile (72, 74 ou 70, 68), en ce que deux corps en forme de rondelle (56, 58) sont agencés entre les deux parties de boîtier et l'un à côté de l'autre en direction de l'axe de broche (16), lesdits corps entourant l'axe de broche ainsi que la seconde partie de boîtier, en ce que les premiers canaux à huile (72, 70) des deux parties de boîtier sont reliés l'un à l'autre via un canal à huile (76, 78) de l'un des corps en rondelle (56) et les seconds canaux à huile (74, 68) des deux parties de boîtier sont reliés l'un à l'autre via un canal à huile (80, 82) de l'autre corps en rondelle (58), et en ce que les deux corps en rondelle sont reliés solidairement en rotation à l'une des parties de boîtier (42), mais avec jeu en direction de l'axe de broche (16) et s'appuient en direction de l'axe de broche via des intervalles d'étanchement contre l'autre partie de boîtier (48).

13. Agencement selon la revendication 12, caractérisé en ce que les intervalles d'étanchement se trouvent dans des plans perpendiculaires à l'axe de broche (16).

14. Agencement selon l'une ou l'autre des revendications 12 et 13, caractérisé en ce que les corps en rondelle (56, 58) sont reliés solidairement en rotation à la première partie de boîtier non rotative (42).
